# EUROPÄISCHE PATENTSCHRIFT

(11) **EP 3 281 289 B1**
(45) Veröffentlichungstag und Bekanntmachung des Hinweises auf die Patenterteilung: **25.08.2021**
(21) Anmeldenummer: 16732246.0
(22) Anmeldetag: 08.06.2016
(51) Int. Cl.: H02M 7/00, H02M 1/088

(54) **LEISTUNGSSTROMRICHTER MIT PARALLEL GESCHALTETEN HALBLEITERSCHALTERN**
POWER CONVERTER COMPRISING SEMICONDUCTOR SWITCHES CONNECTED IN PARALLEL
CONVERTISSEUR DE PUISSANCE POURVU DE COMMUTATEURS À SEMI-CONDUCTEURS MONTÉS EN PARALLÈLE

(30) Priorität: 12.06.2015 DE 102015210796
(43) Veröffentlichungstag der Anmeldung: 14.02.2018
(73) Patentinhaber: Siemens Aktiengesellschaft, 80333 München (DE)
(72) Erfinder: BLUM, Manuel, 85521 Ottobrunn (DE); KIFFE, Walter, 85551 Kirchheim (DE); KOMMA, Thomas, 85521 Ottobrunn (DE); POEBL, Monika, 81667 München (DE)
(86) Internationale Anmeldenummer: PCT/EP2016/063051
(87) Internationale Veröffentlichungsnummer: WO 2016/198460

(56) Entgegenhaltungen:
- DE-A1-102013 211 412
- FR-A1- 2 816 112
- TW-A- 200 917 653
- US-A- 5 170 337
- US-A- 5 459 356
- US-A1- 2003 002 311

## Beschreibung

Die Erfindung betrifft einen Stromrichter, der zum Übertragen einer elektrischen Leistung von mehr als 3 Kilowatt ausgestaltet ist. Ein solcher Stromrichter wird hier als Leistungsstromrichter bezeichnet. Der Stromrichter weist Halbbrückenschaltungen oder kurz Halbbrücken auf, die jeweils Parallelschaltungen aus mehreren Halbleiterschaltern aufweisen. Des Weiteren ist eine Steuereinrichtung zum Schalten der Halbbrücken bereitgestellt.

Leistungsstromrichter erfordern spezielle Halbleiterschalter, also beispielsweise Transistoren, die eine ausreichend große Stromtragfähigkeit und Sperrspannung aufweisen, damit die elektrische Leistung von mehr als 3 Kilowatt mit einer möglichst geringen Anzahl an Halbleiterschaltern geschaltet werden kann. Diese Halbleiterschalter sind in der Regel in sogenannten Leistungshalbleitermodulen zusammengefasst. Es handelt sich hierbei um ein elektronisches Bauteil, in welchem die Halbleiterschalter dicht nebeneinander auf einem gemeinsamen wärmeleitfähigen Träger angeordnet sind. Über Bondingdrähte sind die einzelnen Halbleiterschalter mit Anschlüssen verdrahtet, über welche das Leistungshalbleitermodul mit der Peripherie verschaltet wird. Zum Betrieb eines solchen Leistungshalbleitermoduls muss z.B. eine Schaltungsplatine angeschlossen werden, auf welcher für jeden Halbleiterschalter eine Gate-Treiberschaltung zum Schalten des Halbleiterschalters bereitgestellt ist. Des Weiteren muss das Leistungshalbleitermodul auf einem Kühlkörper montiert werden, um die im beschriebenen Träger gesammelte Wärme aus dem Leistungshalbleitermodul abzuführen.

Durch die kompakte, blockförmige Bauform und die Notwendigkeit der externen Beschaltung mit Gate-Treiberschaltungen ist es schwierig, ein Leistungshalbleitermodul an gegebene Leistungs- und Bauraumdaten anzupassen. Durch die Vielzahl an Anwendungsmöglichkeiten für moderne Umrichtertechnik ergeben sich aber je nach Anwendungsfall verschiedene Anforderungen an Leistungs- und Bauraumdaten. Dem gegenüber steht aber nur eine begrenzte Auswahl an erhältlichen Leistungshalbleitermodulen. So wird bei der begrenzten Anzahl von verfügbaren Leistungshalbleitermodulen das annähernd passende ausgewählt und verwendet werden. Ist kein passendes Leistungshalbleitermodul für eine Anwendung vorhanden, so muss auf ein nicht-optimales überdimensioniertes Leistungshalbleitermodul zurückgegriffen werden, was eine unerwünscht kostenaufwendige Lösung darstellt.

In der bisherigen Modultechnologie für Umrichter wird die Stromtragfähigkeit von Halbleiterschaltern durch modulinterne Parallelschaltung von MOSFET-Chips (MOSFET - Metal Oxide Semiconductor Field Effect Transistor) oder IGBT-Chips (IGBT - Insulated-Gate Bipolar Transistor) realisiert. Dies ist aber nur bis zu einer bestimmten Anzahl von Halbleiterschaltern möglich, da aufgrund der bei steigender Anzahl an Halbleiterschaltern zunehmenden modulinternen Verdrahtungsinduktivität das koordinierte Schalten der Halbleiterschalter beeinträchtigt wird. Dies verhindert den Einsatz von schnellschaltenden Leistungshalbleitern. Um Parallelschaltungen mit mehr Halbleiterschaltern zu erhalten, wurden bisher mehrere Leistungshalbleitermodule parallel geschaltet und getrennt voneinander, aber koordiniert gesteuert.

Das Dokument US 5 170 337 A beschreibt eine Parallelschaltung aus mehreren Halbleiterschaltern, deren Gates gemeinsam über ein Kelvin-Terminal angesteuert werden können. Das Kelvin-Terminal ist über gleichlange Bonding-Drähte mit dem Gate jedes Halbleiterschalters verbunden.

Aus dem Dokument FR 2 816 112 A1 ist bekannt, Halbleiterschalter jeweils über mindestens eine Lotschicht drahtfrei mit einer Leiterbahn mechanisch und elektrisch zu verbinden.

Der Erfindung liegt die Aufgabe zugrunde, bei einem Umrichter den Einfluss von Verdrahtungsinduktivitäten bei parallel geschalteten Halbleiterschaltern zu verringern.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Die Erfindung umfasst einen Stromrichter, das heißt einen Wechselrichter oder Gleichrichter, der zum Übertragen einer elektrischen Leistung von mehr als 3 Kilowatt ausgestaltet ist. Mit anderen Worten handelt es sich um einen Leistungsstromrichter. Insbesondere ist eine Übertragung von mehr als 50 Kilowatt Nennleistung vorgesehen. Bei dem Stromrichter sind Halbbrücken mit jeweils mindestens zwei Parallelschaltungen aus mehreren Halbleiterschaltern bereitgestellt. Die mindestens zwei Parallelschaltungen ergeben sich, da bei
einer Halbbrücke der Wechselspannungs-Phasenleiter über eine erste Parallelschaltung, eine sogenannte High-Side-Schaltung, mit dem Plus-Leiter der Gleichspannungsseite und eine zweite Parallelschaltung, die sogenannte Low-Side-Schaltung, mit dem Minus-Leiter der Gleichspannungsseite verschaltet ist. In der High-Side-Schaltung und in der Low-Side-Schaltung können jeweils auch mehrere Parallelschaltungen bereitgestellt sein, die dann wiederum in Serie geschaltet sind, um hierdurch den Wert der Sperrspannung der Halbbrücke zu vergrößern.

Bei dem erfindungsgemäßen Stromrichter werden die Parallelschaltungen nicht einfach durch Parallelschalten von Halbleiterschaltern gebildet, wobei dann jeder Halbleiterschalter nachträglich mit seiner Gate-Treiberschaltung verdrahtet wird. Stattdessen sind die Parallelschaltungen jeweils durch nebeneinander auf einer gemeinsamen Leiterplatte angeordnete Basisschaltungen gebildet. Jede Basisschaltung weist jeweils einen der Halbleiterschalter der Parallelschaltung und zusätzlich eine über eine Steuerleitung mit einem Gate des Halbleiterschalters elektrisch verbundene Gate-Treiberschaltung für den Halbleiterschalter auf. Im Zusammenhang mit der Erfindung ist unter einem Halbleiterschalter insbesondere ein Transistor zu verstehen, insbesondere ein IGBT oder ein MOSFET. Mit anderen Worten sind auf einer gemeinsamen Leiterplatte stets eine Kombination aus Halbleiterschalter und seiner Gate-Treiberschaltung als Basisschaltung realisiert. Diese Basisschaltungen sind zu der Parallelschaltung parallel geschaltet. Somit ist die Leitungslänge der Steuerleitung zwischen einer Gate-Treiberschaltung und dem Gate des Halbleiterschalters unabhängig davon, welche geometrische Ausdehnung die Parallelschaltung hat. Mit anderen Worten unterscheiden sich die längste Steuerleitung und die kürzeste Steuerleitung in Bezug auf ihre jeweilige Länge um höchsten den Faktor 1,5 voneinander. Mit anderen Worten sind die Steuerleitungen ähnlich lang. Bevorzugt sind die Steuerleitungen gleich lang.

Durch die Erfindung ergibt sich der Vorteil, dass eine Vielzahl von Halbleiterschaltern zu einer Parallelschaltung verschaltet werden kann, wobei der erste Halbleiterschalter in der Parallelschaltung und der letzte Halbleiterschalter in der Parallelschaltung mit ihrer jeweiligen Gate-Treiberschaltung über eine Steuerleitung verbunden sind, die unabhängig von einer Anzahl der in der Parallelschaltung verschalteten Halbleiterschaltern ist. Würde man dagegen die Halbleiterschalter zu einer Parallelschaltung verschalten und die Gate-Treiberschaltung auf einer separaten Leiterplatte bereitstellen, so würden sich hierdurch unterschiedliche Längen der Steuerleitungen je nach räumlicher Ausdehnung der Parallelschaltung ergeben. Durch die ähnlichen Längenwerte der Steuerleitungen ergibt sich der Vorteil, dass auch eine Parallelschaltung mit einer besonders großen Anzahl an Halbleiterschaltern, beispielsweise mehr als 24 Halbleiterschaltern, koordiniert geschaltet werden kann, das heißt die Halbleiterschalter mit geringem technischen Aufwand gleichzeitig geschaltet werden können.

Die Erfindung weist optionale Weiterbildungen auf, durch deren Merkmale sich jeweils zusätzliche Vorteile ergeben.

Gemäß einer Weiterbildung ist die Länge der längsten Steuerleitung zwischen dem Halbleiterschalter und seiner Gate-Treiberschaltung kleiner als 3 Zentimeter. Hierdurch ergibt sich der Vorteil, dass auch die Verbindung zwischen Gate-Treiberschaltung und Halbleiterschalter niederinduktiv ist. Dies ermöglicht eine besonders hohe Schaltfrequenz der Halbleiterschalter im Betrieb des Stromrichters. Die Werte für die Schaltfrequenzen ergeben sich insbesondere bei eine pulsmodulierten Steuerung der Parallelschaltungen.

Eine Weiterbildung sieht vor, dass die Steuerleitungen durch eine jeweilige Leiterbahn der Leiterplatte gebildet sind. Hierdurch ist es anders als bei einem kompakten Leistungshalbleitermodul nicht nötig, die Treiberschaltung durch Bonding mit dem Halbleiterschalter zu verschalten. Dies verringert zusätzlich die parasitäre Induktivität, durch welche die maximal mögliche Schaltfrequenz beeinträchtigt wird.

In Bezug auf die Halbleiterschalter selbst sieht eine Weiterbildung vor, dass bei jeder Parallelschaltung jeweils deren Halbleiterschalter über Leiterbahnen der Leiterplatte parallel geschaltet sind. Hierdurch ergibt sich der Vorteil, dass durch Vorgeben einer geometrischen Ausgestaltung oder Form der Leiterbahnen eine Eigenfrequenz der Anordnung aus parallel geschalteten Halbleitern gezielt eingestellt werden kann und so eine Neigung zum Schwingen während des Schaltens der Parallelschaltungen gezielt gedämpft werden kann. Mit anderen Worten weist diese Anordnung eine Eigenfrequenz auf, bei welcher Spannungsschwankungen und/oder Stromstärkeschwankungen entstehen, wenn die Anordnung mit dieser Eigenfrequenz wiederholt geschaltet wird. Bei der Weiterbildung ist durch eine Geometrie der Leiterbahnen und/oder durch eine Position der Elektronikbausteine die Eigenfrequenz der Anordnung außerhalb eines Intervalls von zugelassenen Schaltfrequenzen der Parallelschaltung eingestellt.

Gemäß einer Weiterbildung sind die Halbleiterschalter jeweils über eine Lotschicht drahtfrei mit den Leiterbahnen mechanisch und elektrisch verbunden. Mit anderen Worten sind die Halbleiterschalter nicht beispielsweise als diskretes Bauteils mit Pins ausgestaltet, die in die Leiterplatte gesteckt und verlötet sind. Stattdessen liegt jeder Halbleiterschalter auf den Leiterbahnen auf und ist an diesen über eine Lotschicht, das heißt eine Schicht aus Lötzinn, angelötet. Hierdurch ist die Anbindung geometrisch besonders kurz. Hierdurch wird eine geringe parasitäre Induktivität erreicht. Damit lässt sich jeder Halbleiterschalter mit einer größeren Schaltfrequenz schalten, ohne dass es hierdurch zur Induktion von einer Überspannung kommt.

Gemäß einer Weiterbildung sind die Halbleiterschalter Wide-Bandgap-Halbleiterschalter, insbesondere Halbleiterschalter auf der Basis von Siliziumcarbid oder Galliumnitrid. Im Gegensatz zu rein Silizium-basierten Halbleiterschaltern lassen sich Wide-Bandgap-Halbleiterschalter mit einer höheren Schaltfrequenz schalten, so dass insbesondere Kombinationen mit der Verschaltung mittels Lotschicht und der Nutzung von Leiterbahnen zum Parallelschalten aller Halbleiterschalter eine besonders hohe Schaltgeschwindigkeit beim Betrieb des Stromrichters erzielt werden kann.

Hierzu sieht eine Weiterbildung vor, dass eine Steuereinrichtung des Stromrichters dazu ausgelegt ist, die Halbbrücken mit einer Schaltfrequenz von über 30 Kilohertz zu schalten. Hierbei wird jede Parallelschaltung mit der Schaltfrequenz geschaltet. Die Steuereinrichtung kann hierzu beispielsweise auf der Grundlage eines Mikroprozessors oder eines ASIC (Application-Specific Integrated Circuit) bereitgestellt sein.

Eine Weiterbildung sieht vor, dass bei jeder Parallelschaltung die Leiterplatte ein Substrat aus Metall aufweist. Hierdurch ergibt sich der Vorteil, dass trotz der hohen Schaltfrequenzen die Halbleiterschalter über das Metall entwärmt werden können, so dass sowohl die Leiterbahnen als auch die Halbleiterschalter mit ein und derselben Kühltechnologie durch Abführen der Verlustwärme über das Metall entwärmt werden können. Eine preisgünstigere Variante sieht eine Leiterplatte auf der Grundlage eines Kunststoffes vor, beispielsweise auf der Grundlage von Epoxidharz oder Glasfasermatten, die in Epoxidharz getränkt sind. Durch die Verwendung eines Kunststoffes ist die Kriechstromfestigkeit besonders hoch. Zudem ergibt sich eine geringere parasitäre Kapazität als bei der Verwendung eines Metallsubstrats, was insbesondere bei einer hohen Schaltfrequenz einen geringeren Leckstrom verursacht.

Durch die beschriebenen Maßnahmen kann ein Stromrichter bereitgestellt sein, bei dem jede Parallelschaltung mehr als 10, insbesondere mehr als 20 Basisschaltungen umfasst. Dennoch kann ein solcher Stromrichter mit mehr als 10, insbesondere mehr als 20, Basisschaltungen mit geringem technischen Aufwand derart koordiniert geschaltet werden, dass innerhalb jeder Parallelschaltung die Halbleiterschalter zeitgleich ihren elektrisch leitfähigen Zustand wechseln, um hierdurch die Halbleiterschalter zwischen einem sperrenden und einem elektrisch leitfähigen Zustand zu schalten.

In der bisherigen Darstellung ist davon ausgegangen worden, dass jede Parallelschaltung auf einer eigenen Leiterplatte angeordnet sein kann. Es kann auch eine ganze Halbbrücke auf einer Leiterplatte angeordnet sein, d.h. die Parallelschaltungen einer Halbbrücke sind auf einer gemeinsamen Platte angeordnet. Es kann auch vorgesehen sein, dass alle Halbbrücken des Stromrichters, das heißt alle Parallelschaltungen, auf einer gemeinsamen Leiterplatte angeordnet sind. Dies macht eine maschinelle Fertigung des Stromrichters technisch besonders einfach.

Ein Stromrichter kann als Gleichrichter oder als Wechselrichter betrieben oder ausgestaltet werden. Zu der Erfindung gehört entsprechend auch ein Umrichter mit zwei Stromrichtern, von denen jeder jeweils eine Ausführungsform des erfindungsgemäßen Stromrichters ist. Bei dem Umrichter sind in an sich bekannter Weise ein Wechselrichter und ein Gleichrichter vorgesehen, der jeweils durch einen der Stromrichter gebildet ist. Bei dem erfindungsgemäßen Stromrichter sind die Parallelschaltungen beider Stromrichter auf einer gemeinsamen Leiterplatte angeordnet. Dies hat zum einen den Vorteil, dass sich der Umrichter maschinell fertigen lässt, da sämtliche Bauelemente über Leiterbahnen der Leiterplatte verschaltet werden können. Des Weiteren ergibt sich eine einheitliche Technologie beim Herstellen des Umrichters, da beispielsweise sämtliche Bauteile über ein Schwelllötverfahren oder eine andere SMD-Technologie auf der Leiterplatte angeordnet werden können. Dies macht die Herstellung des Umrichters in einem Massenherstellungsprozess besonders günstig und/oder durchführbar.

Im Folgenden ist ein Ausführungsbeispiel der Erfindung beschrieben. Hierzu zeigt:
- FIG 1: eine schematische Darstellung einer Ausführungsform des erfindungsgemäßen Umrichters,
- FIG 2: eine schematische Darstellung einer Halbbrücke eines Stromrichters des Umrichters von FIG 1,
- FIG 3: eine schematische Darstellung eines Halbleiterschalters der Halbbrücke von FIG 2, und
- FIG 4: eine schematische Darstellung einer weiteren Parallelschaltung, wie sie in dem Umrichter von FIG 1 bereitgestellt sein kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

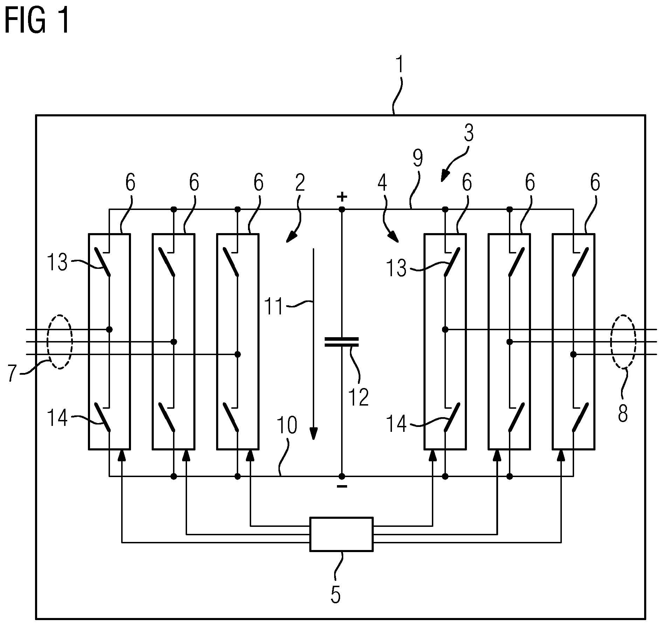

FIG 1 zeigt einen Umrichter 1 mit einem Gleichrichter 2, einem Gleichspannungs-Zwischenkreis oder kurz Zwischenkreis 3, einem Wechselrichter 4 und einer Steuereinrichtung 5. Der Gleichrichter 2 und der Wechselrichter 4 stellen jeweils einen Stromrichter dar. Der Gleichrichter 2 und der Wechselrichter 4 können jeweils Halbbrücken 6 aufweisen, über welche Wechselspannungs-Phasenleitungen oder kurz Phasenleitungen 7, 8 des Umrichters 1 in bekannter Weise mit sowohl einer Plus-Leitung 9 als auch einer Minus-Leitung 10 des Zwischenkreises 3 verschaltet sind. Durch den Gleichrichter 2 kann aus den Wechselspannungen der Phasenleitungen 7 mittels der Halbbrücken 6 in an sich bekannter Weise in dem Zwischenkreis 3 eine Gleichspannung 11 erzeugt werden, die in einem Zwischenkreiskondensator 12 gepuffert werden kann. Durch den Wechselrichter 4 können aus der Gleichspannung 11 in den Phasenleitern 8 jeweils Wechselspannungen mittels der Halbbrücken 6 erzeugt werden.

Der Umrichter 1 kann beispielsweise zum Betreiben einer elektrischen Maschine, beispielsweise einer Synchronmaschine, vorgesehen sein. Der Umrichter 1 kann hierzu über die Phasenleitungen 7 mit einem elektrischen Versorgungsnetz verschaltet sein und über die Phasenleitungen 8 mit der elektrischen Maschine verschaltet sein.

Bei dem Umrichter 1 werden die Halbbrücken 6 durch die Steuereinrichtung 5 geschaltet oder angesteuert. Die Schaltungseinrichtung 5 kann beispielsweise durch elektrische und elektronische Bauelemente in an sich bekannter Weise gebildet sein. Es kann auch jeweils eine Steuereinrichtung für den Gleichrichter 2 und den Wechselrichter 4 vorgesehen sein.

Die Halbbrücken weisen jeweils eine sogenannte High-Side-Schaltung 13 und eine Low-Side-Schaltung 14 auf, von denen in der FIG 1 der Übersichtlichkeit halber nur einige mit einem Bezugszeichen versehen sind. Die Schaltungen 13, 14 stellen dabei jeweils eine Parallelschaltung aus mehreren Halbleiterschaltern dar.

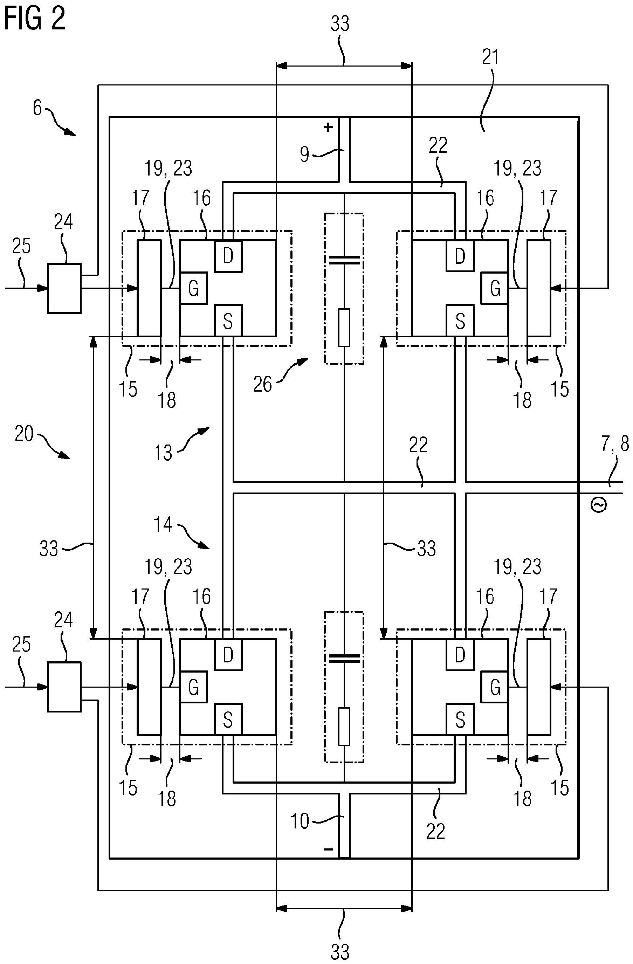

In FIG 2 ist eine Halbbrücke 6 noch einmal genauer dargestellt. Die High-Side-Schaltung 13 und die Low-Side-Schaltung 14 jeweils parallel geschaltete Basisschaltungen 15 auf. Jede Basisschaltung 15 weist einen Halbleiterschalter 16 und eine Gate-Treiberschaltung oder kurz Treiberschaltung 17 für den jeweiligen Halbleiterschalter 16 auf. Zur Veranschaulichung sind von den Halbleiterschaltern 16 jeweils die Anschlüsse Drain D, Source S und Gate G dargestellt. Bei dem Halbleiterschalter 16 kann es sich beispielsweise jeweils um einen IGBT oder MOSFET handeln. Die Halbleiterschalter 16 sind insbesondere auf einer Wide-Bandgap-Halbleitertechnologie basierend ausgestaltet, insbesondere handelt es sich um Siliziumcarbid- und/oder Galliumnitridbasierte Transistoren.

Bei den Gate-Treiberschaltungen kann es sich jeweils um eine Schaltung handeln, wie sie an sich aus dem Stand der Technik als Gate-Treiber bekannt ist. Durch die Gate-Treiberschaltung wird beim Schalten des jeweiligen Halbleiterschalters 16 eine Gate-Kapazität des Gates G umgeladen. Bei den Halbbrücken 6 des Umrichters 1 ist dies mit einer besonders hohen Schaltfrequenz und/oder Schaltgeschwindigkeit möglich. Insbesondere ist eine Schaltfrequenz größer als 30 Kilohertz ermöglicht.

Hierzu ist ein Abstand 18 zwischen den Treiberschaltungen 17 und dem zugehörigen Halbleiterschalter 16 derart gering, dass eine Steuerleitung 19, durch welche die Treiberschaltung 17 mit dem Gate G verbunden ist, kurz ausgestaltet ist und hierdurch eine geringe Verdrahtungsinduktivität ausbildet. Insbesondere beträgt der Abstand 18 weniger als 2 Zentimeter. Um diese niederinduktive Anordnung aus Treiberschaltung 17 und Halbleiterschalter 16 zu ermöglichen, ist in dem in FIG 2 gezeigten Beispiel die Halbbrücke 6 als eine Schaltungsanordnung 20 ausgestaltet, die dadurch gekennzeichnet ist, dass bei jeder Basisschaltung 15 die Treiberschaltung 17 und der Halbleiterschalter 16 auf einer gemeinsamen Leiterplatte 21 angeordnet sind. In dem in FIG 2 gezeigten Beispiel sind sämtliche Basisschaltungen 15 auf einer gemeinsamen Leiterplatte 21 angeordnet. Die Leiterplatte 21 ist insbesondere eine Platte, die beispielsweise als PCB (printed circuit board) ausgestaltet sein kann. Die Leiterplatte 21 kann insbesondere als IMS ausgestaltet sein.

Auf der Leiterplatte 21 können Leiterbahnen 22 aus Kupfer oder Aluminium angeordnet sein, durch welche eine Verbindung der Basisschaltungen 15 mit der Plus-Leitung 9, der Minus-Leitung 10 und den jeweiligen Phasenleitern 7, 8 bereitgestellt sein kann. Bei der Schaltungsanordnung 8 ist insbesondere auch die Steuerleitung 19 durch eine Leiterbahn 23 auf der Leiterplatte 21 gebildet.

Zum gleichzeitigen Schalten der jeweils parallel geschalteten Halbleiterschalter 16 über deren Treiberschaltung 17 kann bei der Schaltungsanordnung 20 jeweils eine Treiberlogik oder Logikschaltung 24 bereitgestellt sein, welche ein Steuersignal 25 der Steuereinheit 5 an die beiden Treiberschaltungen 17 der parallel geschalteten Basisschaltungen 15 weiterleitet. Die Logikschaltung 24 kann durch einen Steuerschaltkreis zum Koordinieren der Schaltzeitpunkte der Basisschaltungen 15 ausgestaltet sein.

Zu den parallel geschalteten Halbleiterschaltern 16 kann des Weiteren optional eine Snubber-Schaltung 26 parallel geschaltet sein. Es kann jeweils eine Snubber-Schaltung 26 für jeden Halbleiterschalter 16 oder eine gemeinsame Snubber-Schaltung 26 vorgesehen sein. Eine Snubber-Schaltung 26 kann beispielsweise durch einen an sich bekannten Snubber-Kondensator oder ein RC-Glied oder durch einen Kondensator allein gebildet sein.

Die Schaltungsanordnung 20 kann dazu ausgestaltet sein, einen Strom mit einer Stromstärke in einem Bereich von mehr als 50 Ampere, insbesondere mehr als 100 Ampere, zu führen. Durch die gezeigte Parallelschaltung ist es hierbei möglich, dass jeder Halbleiterschalter 16 nur dazu ausgelegt ist, einen Teilstrom als Nennstrom zu führen, so dass der Nennstrom jedes Halbleiterschalters 16 kleiner ist als der Nennstrom der Schaltungsanordnung 25. Eine Sperrspannung der Halbleiterschalter 16 kann größer als 100 Volt sein.

Die Treiberschaltungen 17 können jeweils mit der Steuereinrichtung 5 über eine galvanische Trenneinrichtung, z.B. einen Optokoppler, gekoppelt sein. Hierdurch ist auch bei hohen Sperrspannungen an der Drain-Source-Schaltstrecke der Halbleiterschalter 16 trotz der Nähe der Treiberschaltung 17 kein Übertreten der Sperrspannung auf die Steuereinrichtung 5 möglich.

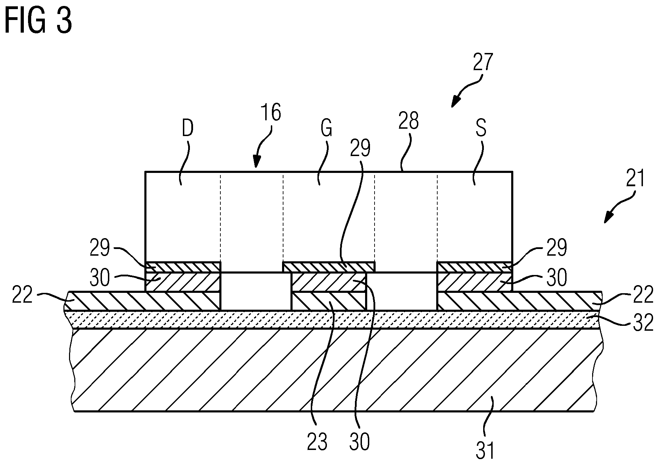

FIG 3 zeigt, wie ein einzelner Halbleiterschalter 16 auf der Leiterplatte 21 befestigt und mit den Leiterbahnen 22, 23 verschaltet sein kann.

Jeder Halbleiterschalter 16 kann als diskreter Elektronikbaustein 27 ausgestaltet sein, bei welchem die Halbleiterschichten in einem Gehäuse 28 angeordnet sein können. In FIG 3 ist veranschaulicht, wie in dem Gehäuse 28 elektrisch leitfähige Kontaktflächen 29 für die drei Kontakte Drain D, Source S und Gate G ausgestaltet sein können. Zwischen den Kontaktflächen 29 und den Leiterbahnen 22, 23 ist eine Lotschicht 30 angeordnet, die durch Lötzinn gebildet sein kann. Die Lotschicht 30 kann beispielsweise mittels eines Schwelllötverfahrens an den Leiterbahnen 22, 23 oder an den Kontaktflächen 29 angeordnet worden sein, und der Elektronikbaustein 27 mit den Leiterplatten 22, 23 verlötet worden sein.

In FIG 3 ist des Weiteren dargestellt, wie die Leiterplatte 21 als IMS mit einem metallischen Substrat 31 und einer elektrisch isolierenden Schicht 32 zwischen dem Substrat 31 und den Leiterbahnen 22, 23 ausgestaltet sein kann. Das Substrat 31 kann beispielsweise aus Aluminium oder Kupfer gebildet sein. Die Isolierschicht 32 kann beispielsweise eine Keramikschicht oder ein Lack sein.

Indem die Halbleiterschalter als einzelne Elektronikbausteine 27 bereitgestellt sind, können sie auf der Leiterplatte 21 derart angeordnet sein, dass ein jeweiliger Abstand 33 zwischen zwei der Elektronikbausteine 27 größer als 3 Zentimeter ist. Hierdurch ist eine zuverlässige Kühlung der Elektronikbausteine 27 gewährleistet. Die Anordnung der Elektronikbausteine 27 auf der Leiterblatte 21 kann in der Weise erfolgen, dass eine Eigenfrequenz der Schaltungsanordnung 20 ungleich der Schaltfrequenzen ist, mittels welchen die Steuerschaltung 5 die Halbbrücken 6 betreibt.

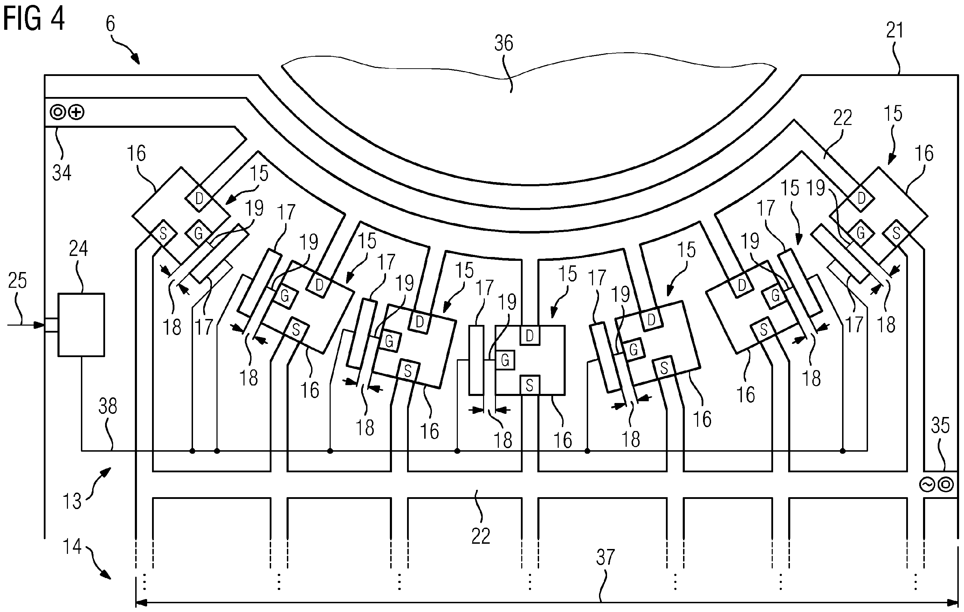

FIG 4 zeigt von einem Stromrichter eine High-Side-Schaltung 13, die eine Parallelschaltung darstellt. Es kann sich hierbei um eine alternative Ausführungsform der High-Side-Schaltung 13 handeln, die in dem Umrichter von FIG 1 in dem Gleichrichter 2 oder dem Wechselrichter 4 bereitgestellt sein kann. Die im Folgenden gemachten Ausführungen zur High-Side-Schaltung 13 gelten entsprechend auch für eine Low-Side-Schaltung 14, durch welche der Wechselspannungsanschluss 35 mit einem (nicht dargestellten) Minus-Anschluss der Halbbrücke 6 verschaltet ist.

Über die High-Side-Schaltung 13 sind ein Gleichspannungsanschluss 34 und ein Wechselspannungsanschluss 35 gekoppelt. Die Basisschaltungen 15 der High-Side-Schaltung 13 sind in der beschriebenen Weise über Leiterbahnen 22 parallel geschaltet. Da die Halbleiterschalter 16 nicht als Leistungshalbleitermodul bereitgestellt sind, sondern als einzelne Elektronikbausteine, konnte die High-Side-Schaltung 13 in ihrem Layout an eine Form einer elektrischen Maschine 36 angepasst werden, an deren Gehäuse der Umrichter 1 befestigt sein soll. In dem Beispiel ist eine bogenförmige Anordnung gezeigt. Eine Anzahl der Halbleiterschalter 16 ist an den Strombedarf der elektrischen Maschine 36 angepasst worden. Auch dies konnte durch Auslegen der Leiterplatte 21 vorgenommen werden. Indem die Treiberschaltungen 17 jeweils neben dem zugehörigen Halbleiterschalter 16 angeordnet sind, sind trotz der geometrischen Gesamtlänge 37 der Parallelschaltung der High-Side-Schaltung 13 die Steuerleitungen 19 aller Basisschaltungen 15 ähnlich lang. Mit anderen Worten weisen die Längen oder Abstände 18 Werte auf, von denen der kleinste und der größte Wert sich höchstens um einen Faktor 1,5 unterscheiden. Um alle Basisschaltungen 15 zeitgleich schalten zu können, sind alle Treiberschaltungen 17 mittels einer Koppelleitung 38 mit der Logikschaltung 24 der High-Side-Schaltung 13 gekoppelt. Obwohl die Treiberschaltungen 17 unterschiedlich große Abstände oder Leitungslängen zur Logikschaltung 24 haben, lassen sich dennoch die Halbleiterschalter 16 mittels ihrer jeweiligen Treiberschaltung 17 gleichzeitig schalten, da der Umladevorgang an den Gate-Kapazitäten der Halbleiterschalter 16 nur über die Steuerleitung 19 erfolgen muss.

Somit ist auch bei einer Anzahl von Halbleiterschaltern 16 größer als 5, insbesondere größer als 10, insbesondere größer als 20, dennoch ein zeitgleiches Schalten der Halbleiterschalter 16 mittels ihrer Treiberschaltung 17 möglich, da die Längen 18 der Steuerleitungen 19 sich höchstens um einen Faktor 1,5 unterscheiden.

Durch das Verschalten von diskreten Halbleiterschaltern 16 auf einer Leiterplatine können somit Treiber und Halbleiterschalter 16 niederinduktiver angebunden werden. Dabei erhält jedes Leistungsbauelement (Halbleiterschalter 16) seinen eigenen Treiber. Dies vereinfacht die Parallelschaltbarkeit und korrekte Ansteuerung mehrere Halbleiterzellen 16 zur Erhöhung der Stromtragfähigkeit. Diese lässt sich über die Anzahl der parallelisierten Halbleiterschalter anwendungsbezogen einstellen. Die beschriebene Aufbautechnik ermöglicht ein Bauelemente-Parallelschaltungskonzept inklusive der notwendigen Schaltungsperipherie. Man ist nicht mehr auf käufliche Leistungshalbleitermodule und deren Dimensionierung angewiesen.

Durch Verwendung des Metallsubstrats 31 wird es möglich, die Komponenten des Umrichters 1 nicht mehr konzentriert anzuordnen, sondern der Umrichter 1 kann in einzelne Basisschaltungen zerlegt werden. Damit ist es möglich, die zentralen Verlustleistungsquellen aufzuteilen oder zu verteilen und über das Metallsubstrat 31 zu entwärmen. Gleichzeitig ermöglichen die Leiterbahnen der Leiterplatte 21, die Halbleiterschalter 16 auch zu verdrahten. Auch das Anbinden der Treiberschaltungen 17 an die Halbleiterschalter 16 ist über Leiterbahnen möglich. Unter Verwendung einer Leiterplatte 21 mit Metallsubstrat 31 kann der komplette Umrichter 1 verdrahtet werden und effizient mit einer einzigen Kühlmethode entwärmt werden. Im Stand der Technik ist es dagegen nötig, die Leistungshalbleitermodule und die Filterkomponenten (Snubber) und den Zwischenkreiskondensator separat mit unterschiedlichen Methoden zu entwärmen. Dies ist aufwendig und montageunfreundlich und oftmals teuer.

Insgesamt zeigt das Beispiel, wie durch die Erfindung eine Parallelschaltung von SMD-Leistungshalbleiterbauelementen auf PCB/IMS-Basis bereitgestellt werden kann.

## Patentansprüche

1. Stromrichter (2,4), der zum Übertragen einer elektrischen Leistung von mehr als 3 Kilowatt ausgestaltet ist und der Halbbrücken (6) mit jeweils mindestens zwei Parallelschaltungen (13,14) aus mehreren Halbleiterschaltern (16) aufweist, wobei die Parallelschaltungen (13,14) jeweils durch nebeneinander auf einer gemeinsamen Leiterplatte (21) angeordnete Basisschaltungen (15) gebildet sind, **dadurch gekennzeichnet, dass** jede Basisschaltung (15) jeweils einen der Halbleiterschalter (16) und zusätzlich eine über eine Steuerleitung (19) mit einem Gate (G) des Halbleiterschalters (16) elektrisch verbundene Gate-Treiberschaltung (17) eines jeweiligen Gate-Treibers für den Halbleiterschalter (16) aufweist und bei der Parallelschaltung (13,14) die kürzeste Steuerleitung (19) und die längste Steuerleitung (19) sich in Bezug auf ihre jeweilige Länge (18) einander um höchstens den Faktor 1,5 unterscheiden, wobei ein jeweiliger Abstand (18) zwischen den Treiberschaltungen (17) und den zugehörigen Halbleiterschaltern (16) derart gering ist, dass die Steuerleitungen (19) kurz ausgestaltet sind und hierdurch geringe Verdrahtungsinduktivitäten ausbilden.

2. Stromrichter (2,4) nach Anspruch 1, wobei die Länge (18) der längsten Steuerleitung (19) kleiner als 3 Zentimeter ist.

3. Stromrichter (2,4) nach einem der vorhergehenden Ansprüche, wobei die Steuerleitungen (19) durch eine jeweilige Leiterbahn (23) der Leiterplatte (21) gebildet sind.

4. Stromrichter (2,4) nach einem der vorhergehenden Ansprüche, wobei bei jeder Parallelschaltung (13,14) jeweils deren Halbleiterschalter (16) über Leiterbahnen (22) der Leitplatte (21) parallel geschaltet sind.

5. Stromrichter (2,4) nach Anspruch 4, wobei die Halbleiterschalter (16) jeweils über mindestens eine Lotschicht (30) drahtfrei mit den Leiterbahnen (22) mechanisch und elektrisch verbunden sind.

6. Stromrichter (2,4) nach einem der vorhergehenden Ansprüche, wobei die Halbleiterschalter (16) Wide-Bandgap-Halbleiterschalter sind.

7. Stromrichter (2,4) nach einem der vorhergehenden Ansprüche, wobei eine Steuereinrichtung (5) des Stromrichters (2,4) dazu ausgelegt ist, die Halbbrücken (6) mit einer Schaltfrequenz von über 30 Kilohertz zu schalten.

8. Stromrichter (2,4) nach einem der vorhergehenden Ansprüche, wobei bei jeder Parallelschaltung (13,14) die Leiterplatte (21) ein Substrat (31) aus Metall aufweist.

9. Stromrichter (2,4) nach einem der vorhergehenden Ansprüche, wobei jede Parallelschaltung (13,14) mehr als 10, insbesondere mehr als 20, Basisschaltungen (15) umfasst.

10. Stromrichter (2,4) nach einem der vorhergehenden Ansprüche, wobei alle Parallelschaltungen (13,14) auf einer gemeinsamen Leiterplatte (21) angeordnet sind.

11. Umrichter (1) mit zwei Stromrichtern (2,4) nach jeweils einem der vorhergehenden Ansprüche, wobei Parallelschaltungen (13,14) beider Stromrichter (2,4) auf einer gemeinsamen Leiterplatte (21) angeordnet sind.

## Claims

1. Electrical converter (2, 4) which is designed to transfer an electric power of more than 3 kilowatts and which has half-bridges (6) each having at least two parallel circuits (13, 14) containing a plurality of semiconductor switches (16), wherein the parallel circuits (13, 14) are each formed by base circuits (15) arranged next to one another on a common printed circuit board (21),
**characterized in that**
each base circuit (15) respectively has one of the semiconductor switches (16) and additionally a gate driver circuit (17) of a respective gate driver for the semiconductor switch (16), said gate driver circuit being electrically connected to a gate (G) of the semiconductor switch (16) by means of a control line (19), and, in the parallel circuit (13, 14), the shortest control line (19) and the longest control line (19) differ from one another with respect to their respective length (18) by at most the factor of 1.5, wherein a respective spacing (18) between the driver circuits (17) and the associated semiconductor switches (16) is so small that the control lines (19) are configured to be short and as a result form low wiring inductances.

2. Electrical converter (2, 4) according to Claim 1, wherein the length (18) of the longest control line (19) is less than 3 centimetres.

3. Electrical converter (2, 4) according to either of the preceding claims, wherein the control lines (19) are formed by a respective conductor track (23) of the printed circuit board (21) .

4. Electrical converter (2, 4) according to one of the preceding claims, wherein, in each parallel circuit (13, 14), the respective semiconductor switches (16) thereof are connected in parallel by means of conductor tracks (22) of the printed circuit board (21).

5. Electrical converter (2, 4) according to Claim 4, wherein the semiconductor switches (16) are each mechanically and electrically connected in a wireless manner to the conductor tracks (22) by means of at least one solder layer (30).

6. Electrical converter (2, 4) according to one of the preceding claims, wherein the semiconductor switches (16) are wide-bandgap semiconductor switches.

7. Electrical converter (2, 4) according to one of the preceding claims, wherein a control device (5) of the electrical converter (2, 4) is configured to switch the half-bridges (6) at a switching frequency of more than 30 kilohertz.

8. Electrical converter (2, 4) according to one of the preceding claims, wherein, in each parallel circuit (13, 14), the printed circuit board (21) has a substrate (31) made of metal.

9. Electrical converter (2, 4) according to one of the preceding claims, wherein each parallel circuit (13, 14) comprises more than 10, in particular more than 20, base circuits (15).

10. Electrical converter (2, 4) according to one of the preceding claims, wherein all the parallel circuits (13, 14) are arranged on a common printed circuit board (21).

11. Converter (1) having two electrical converters (2, 4) according to each of the preceding claims, wherein parallel circuits (13, 14) of the two electrical converters (2, 4) are arranged on a common printed circuit board (21).

## Revendications

1. Convertisseur (2, 4), qui est conformé pour la transmission d'une puissance électrique de plus de 3 kilowatt et qui a des demi-ponts (6) ayant chacun au moins deux circuits (13, 14) parallèles composés de plusieurs interrupteurs (16) à semi-conducteur, dans lequel les circuits (13, 14) parallèles sont formés chacun de circuits (15) de base disposés les uns à côtés des autres sur une plaquette (21) à circuit imprimé commune,
**caractérisé en ce que**
chaque circuit (15) de base a respectivement l'un des interrupteurs (16) à semi-conducteur et en outre un circuit (17) d'excitation de grille, relié électriquement à une grille (G) de l'interrupteur (16) à semi-conducteur, d'un excitateur de grille respectif pour l'interrupteur (16) à semi-conducteur et, dans le circuit (13, 14) parallèle, la ligne (19) de commande la plus courte et la ligne (19) de commande la plus longue se distinguent en relation à leur longueur (18) respective l'une de l'autre d'au plus le facteur 1,5, une distance (18) respective entre les circuits (17) d'excitation et les interrupteurs (16) à semi-conducteurs associés étant petite de manière à ce que les lignes (19) de commande soient courtes et forment ainsi des inductance de câblage petites.

2. Convertisseur (2, 4) suivant la revendication 1, dans lequel la longueur (18) de la ligne (19) de commande la plus longue est plus petite que 3 centimètres.

3. Convertisseur (2, 4) suivant l'une des revendications précédentes, dans lequel les lignes (19) de commande sont formées par une piste (23) conductrice respective de la plaquette (21) à circuit imprimé.

4. Convertisseur (2, 4) suivant l'une des revendications précédentes, dans lequel dans chaque circuit (13, 14) parallèle respectivement ses interrupteurs (16) à semi-conducteur sont montés en parallèle par des pistes (12) conductrices de la plaquette (21) à circuit imprimé.

5. Convertisseur (2, 4) suivant la revendication 4, dans lequel les interrupteurs (16) à semi-conducteurs sont reliés mécaniquement et électriquement sans fil aux pistes (22) conductrices respectivement par au moins une couche (30) de brasure.

6. Convertisseur (2, 4) suivant l'une des revendications précédentes, dans lequel les interrupteurs (16) à semi-conducteur sont des interrupteurs à semi-conducteur à wide-bandgap.

7. Convertisseur (2, 4) suivant l'une des revendications précédentes, dans lequel un dispositif (5) de commande du convertisseur (2, 4) est conçu pour commuter les demi-ponts (6) à une fréquence de commutation de plus de 30 kilohertz.

8. Convertisseur (2, 4) suivant l'une des revendications précédentes, dans lequel dans chaque circuit (13, 14) parallèle la plaquette (21) à circuit imprimé a un substrat (31) en métal.

9. Convertisseur (2, 4) suivant l'une des revendications précédentes, dans lequel chaque circuit (13, 14) parallèle comprend plus de 10, notamment plus de 20, circuits (15) de base.

10. Convertisseur (2, 4) suivant l'une des revendications précédentes, dans lequel tous les circuits (13, 14) parallèles sont disposés sur une plaquette (21) à circuit imprimé commune.

11. Convertisseur (1) ayant deux convertisseurs (2, 4) suivant l'une des revendications précédentes, dans lequel des circuits (13, 14) parallèles des deux convertisseurs (2, 4) sont montés sur une plaquette (21) à circuit imprimé commune.
